# EUROPEAN PATENT APPLICATION

(11) **EP 4 249 418 A1**
(43) Date of publication of application: **27.09.2023**
(21) Application number: 22164431.3
(22) Date of filing: 25.03.2022
(51) Int. Cl.: B66C 1/02

(54) **LIFTING YOKE FOR LIFTING A BUILDING ELEMENT AND METHOD FOR LIFTING A BUILDING ELEMENT**

(71) Applicant: Siemens Gamesa Renewable Energy A/S, 7330 Brande (DK)
(72) Inventor: Nielsen, Mogens, 9220 Aalborg (DK)
(74) Representative: SGRE-Association

(57) **Abstract**

Lifting yoke for lifting a building element (2) used for building a rotor blade of a wind turbine, wherein the lifting yoke (1) comprises a main body (3) and at least one attachment device (6), wherein the main body (3) is arrangeable hanging on a hoisting means and wherein the attachment device (6) comprises at least one attachment means (7) attachable to a surface (11, 16) of a building element (2) to be lifted, wherein the attachment device (6) is pivotable with and without attached building element (2) at least between a first position and a second position, wherein the attachment means (7) is pointing downwards in the first position for attachment to a top side surface of a building element (2) and upwards in the second position for attachment to a bottom side surface of a building element (2).

## Description

The invention relates to a lifting yoke for lifting a building element used for building a rotor blade of a wind turbine, wherein the lifting yoke comprises a main body and at least one attachment device, wherein the main body is arrangeable hanging on a hoisting means and wherein the attachment device comprises at least one attachment means attachable to a surface of a building element to be lifted. Furthermore, the invention relates to a method for lifting a building element used for building a rotor blade of a wind turbine.

In most cases, wind turbines comprise a rotor with a plurality of rotor blades, generally for converting wind energy into electrical energy by means of a generator. Due to the enormous size of the wind turbine blades, their manufacturing is a major challenge for manufacturers of wind turbines. Normally, the wind turbine blades are fabricated from fiberreinforced material involving the handling of large parts like fiber mats, in particular for casting the shell of the wind turbine blade. The wind turbine blade may be assembled using a plurality of such fiber mats as well as other components, for instance rigid core elements. In addition or alternatively, also precasted blade segments may be used.

One technology for facilitating the fabrication of wind turbine blades is the usage of preform building elements, or preforms, respectively, which are preformed smaller blade part or blade segments which are used in particular for building the respective blade shell. These preform building elements are prefabricated separately and then arranged and aligned in a blade mold according to the requested geometry of the blade to be manufactured. The preform building elements may be arranged in the blade mold for casting an entire rotor blade or a larger rotor blade part.

The preform building elements comprise for instance a plurality of fiber mats and/or core materials, which are locally attached to each other in order to allow for their mutual handling facilitating the arrangement of the components in the blade mold. The core material may be for instance a flexible or rigid balsa wood plate. A flexible balsa wood plate may be knife-cut or saw-cut into small pieces that may be held together by one or more fiberglass nets, to which the balsa pieces are glued. When casting the wind turbine blade, the preform building elements can be soaked with resin forming for instance the shell of the rotor blade to be manufactured. Therefore, the components of the preform building elements are only locally adhered and/or held together using a binding agent dissolvable in the resin, so that the resin infusion, in particular into fiber-based components of the preform element, is not obstructed during the casting of the blade.

The preform elements may be fabricated in a preform mold used for arranging and locally attaching the components of the preform building element. It is possible that the preform building elements are covered for instance under a vacuum foil and/or in a vacuum bag to stabilize the stack of materials that constitutes the preform building element. From this preform mold, the preform building element has to be lifted and moved to the blade mold, or to an intermediate storage position, respectively. For handling building elements like preform building elements, lifting yokes may be used. To the lifting yoke, a building element may be attached for lifting and transporting it in a manufacturing facility.

Preform building elements may have a slightly bent geometry, depending on the shape of a molding surface of the preform mold, so that they may exhibit for instance a convex surface and a concave surface. The geometry of the wind turbine blade to be manufactured may require that the preform building elements are rotated prior to their arrangement in the blade mold, since either the concave surface or the convex surface has to be arranged in contact with the blade mold, or in contact with further components subsequently arranged in the blade mold, respectively. Such a rotation of the preform element may be conducted for instance manually and/or with the help of two or more cranes and/or lifting steps in order to turn the preform building element. However, such a procedure has the risk of damaging the soft edges of the preform building element and/or to locally deform the preform element, for instance by twisting, so that a geometry of the preform element may be changed inadvertently.

Consequently, there is the need for facilitating the rotation of a preform building element prior to or during the manufacture of a wind turbine rotor blade.

The invention is based on the objective problem to provide an improved lifting yoke, which in particular facilitates the arrangement of building elements prior to and/or during the manufacturing of a wind turbine rotor blade.

According to the invention, this problem is solved by a lifting yoke as initially described, wherein the attachment device is pivotable with and without attached building element at least between a first position and a second position, wherein the attachment means is pointing downwards in the first position for attachment to a top side surface of a building element and upwards in the second position for attachment to a bottom side surface of a building element.

The main body of the lifting yoke may be attached to a hoisting means so that the lifting yoke may be lifted using the hoisting means. The hoisting means may be for instance a crane, a fork lift or another movable device that allows for moving the lifting yoke and/or a building element attached to the lifting yoke upwards and downwards. The hoisting means may also be moveable laterally, in particular through a facility used for the manufacturing of wind turbine rotor blades, to allow for transporting the building element.

The lifting yoke comprises one or more attachment devices, which each have one or more attachment means used for releasably attaching a building element to the lifting yoke. The at least one attachment means is attachable to a surface of a building element to be lifted, so that it may be held firmly by the lifting yoke for lifting and/or transportation.

The lifting yoke may be used for lifting different types of building elements. Preferably, the lifting yoke may be used for lifting preform building elements to facilitate their handling. However, also other types of building elements, in particular precasted building elements, may be lifted using the lifting yoke.

A precasted building element may comprise one or more components, for example fiber mats and/or core components, that have already been infused with a resin for forming a solid component. In contrast to a preform building element, the precasted building element does comprise dry fiber mats that have been infused by a resin yet, or that are hardened due to a solidified infused resin yet, respectively.

The attachment device is pivotable relative to the main body between a first position and a second position. The one or more attachment means of the attachment device are coupled to the attachment device with respect to this pivoting movement, or the rotation, respectively, so that the attachment means are pivoted as well. Hence, by pivoting the attachment device, the direction in which the attachment means are pointing is changeable.

In the first position, the attachment means are pointing downwards so that they may be, for instance, lowered on the top side surface of a building element. In the second position, the attachment means are pointing upwards, so that they may be moved underneath the bottom side surface of a building element to lift the building element by supporting it on the attachment means. When pivoting the attachment devices, all attachment means of the attachment devices are pivoted as well so that the common direction, in which they point, is changed by pivoting the attachment devices. By the rotation between the first position and the second position, a building element attached to the lifting yoke may rotated for instance by 180°.

This has the advantage that a building element stored for instance on a storage rack may be attached to the lifting yoke by either its top side surface or its bottom side surface. This allows for attaching the lifting yoke to the surface of the building element, which forms the top side surface after arrangement of the blade mold, so that the lifting yoke may be advantageously used to lift a building element onto the blade mold in the correct position.

In order to arrange a building element, which has been attached with its bottom side surface to the lifting yoke, in the blade mold and/or onto further components of the rotor blade, the attachment device may be pivoted from the second position to the first position, so that the attached building element can be lowered onto to blade mold, or onto the further components used for manufacturing the rotor blade, respectively.

In addition, the ability to pivot the attachment device between the first position and the second position has the advantage that already after lifting a building element out of the mold used for manufacturing of the building element, a rotation of the building element can be conducted prior to storing the building element on a storage rack, or on a transportation device or the like.

The attachment device may be pivoted between the first position and the second position both in an empty state of the lifting yoke, when no building element is attached to the lifting yoke, and in an occupied state of the lifting yoke, in which a building element is attached to the lifting yoke. Advantageously, the lifting yoke, or its attachment means, respectively, can be oriented prior to picking up a building element and/or during the lifting procedure in order to orient the building element correctly for the arrangement of the building element, or for the release of the building element from the lifting yoke, respectively.

In addition, also lifting without turning the lifted building elements is possible so that the lifting yoke may be used also for those building elements that do not have to be rotated for their arrangement. Advantageously, the lifting yoke may be used for differently oriented building elements required in the manufacture of a wind turbine rotor blade so that the number of required lifting yokes can be reduced.

The lifting yoke may comprise two or more attachment devices which are in particular coupled to each other so that they may be pivoted simultaneously between the first position and the second position, in particular by using at least one actuator coupled to the attachment devices. The attachment devices may each have one or more attachment means, wherein all attachment means of the attachment devices are in particular pointing in the same direction in the first position and in the second position of the attachment devices, so that all attachment means may be attached to the top side same surface, or bottom side surface, respectively, of the building element.

The lifting yoke may be adapted for lifting building elements with a length of for example between 10 m to 20 m, for instance 16 m, and a width of for example 3 m to 5 m. In particular, the building elements may be straight along their length direction and curved in their width direction so that they exhibit a slightly bent geometry with a concave surface and an opposing convex surface. The building elements may comprise one or more layers of a fiber-based material and/or one or more core layers consisting of a rigid material, for instance of balsa wood and/or of a polymer foam-based material.

For consolidating the components used for forming a preform building element, an adhesive used for binding the components of the preform building elements together may be heattreated. Such a heat-treatment may occur for instance in a preform mold or by using a heat-source external to the preform mold, for instance an oven or the like.

The preform building element may have a vacuum foil or a vacuum bag arranged around the components forming the preform building elements when the preform building element is lifted. Therefore, it is possible that the lifting yoke, or its attachment means, respectively, are suitable for lifting a preform building element arranged inside the vacuum bag, or underneath a vacuum foil, respectively. Alternatively, it is possible that the vacuum foil or vacuum bag, which may be used during the manufacture of the preform building element, is removed prior to the attachment of the lifting yoke to the building element.

In addition or alternatively, at least one side of the preform building element may be covered by a supporting tray used for instance to define a molding surface for the manufacturing of a building element. The supporting tray may be for instance a metal tray or a tray of another material that allows to provide a bracing structure, or to support the building element, respectively. Also the metal tray may remain on the building element during lifting and/or during a storage of the building element. The attachment of the attachment means to such a building element may occur at the metal tray, or at the opposing surface of the building element, respectively.

The attachment means may be adapted to be attached to smooth surfaces, in particular to surfaces of a fiber-based material, for instance glass fiber mats, carbon fiber mats or the like. In addition, also attachment means attachable to a vacuum foil-covered surface and/or to a metal surface may be used. Correspondingly, also precasted building elements may be lifted from the respective pre-casting mold, wherein the attachment means is attachable to the rigid or hardened surface of the precasted element.

Preferably, the attachment means is a needle-gripper, a vacuum attachment means, in particular a suction cup, a flow cup or a vacuum blanket, and/or an aerodynamic attachment means, in particular a vortex gripper and/or a Bernoulli gripper. These types of attachment means are in particular releasably attachable to a surface of a building element like a preform building element and/or a precasted building element. Needle-grippers may be used in particular for the attachment of preform building elements, wherein vacuum attachment means and aerodynamic attachment means are attachable to both preform building elements and precasted building elements, in particular without affecting the structure of the surface of the attached building element. An attachment means provided as flow cup may in particular be a vacuum flow cup, which provides a vacuum, or a low pressure, respectively, by permanently sucking air into the cup allowing for attachment of the building element to the flow cup.

In a preferred embodiment, the attachment device comprises a box-shaped frame structure, wherein the attachment means is coupled to the box-shaped frame structure by a holding section and/or at least one arm, wherein the arm is movable relatively to the box-shaped frame structure. The holding section may be for instance a convex or concave arc segment-shaped holding structure to which the lifting means are mounted. The holding section may be attached to the box-shaped frame structure of the attachment device. This facilitates the attachment of the attachment means to the surface of a building element. Also a holding section comprising a plurality of segments may be used, wherein the segments may be arranged and attached in different angles towards each other to allow for adapting the shape of the holding section and therefore also of the orientation of the attachment means relative to each other. This allows also to adapt the attachment device, or the entire lifting yoke, respectively to different types of building elements.

In addition or as an alternative to the holding section, also arms coupling the attachment means to the box-shaped frame structure and/or to the holding segment may be used. By moving the arm relatively to the box-shaped frame structure of the attachment device, also the attachment means can be moved. This allows for instance to extend or to retract the attachment means relative to the frame structure of the attachment device, or relative to the holding section, respectively.

By providing the at least one attachment means of the attaching device in such manner that it is movable relative to the box-shaped frame structure, an adaption of the position of the attachment means and therefore an adaption of the attachment device, or the entire lifting yoke, respectively, to the building element to be lifted becomes possible. The usage of a box-shaped frame structure, or lattice structure, respectively, allows to provide a support for the length-adjustable attachment means while enabling a light-weight construction of the lifting yoke.

Preferably, the attachment device comprises a plurality of attachment means, wherein the attachment means are linearly movable relatively to each other, wherein the attachment means are arrangeable along a convex or concave plane. A plurality of attachment means of an attachment device may be for instance arranged along a line, wherein by using attachment means coupled to a movable arm, the distance between the attachment means and an edge of a box-shaped frame structure of the attachment device can be adjusted. This allows for arranging the attachment means along a convex or concave plane while they are pointing in the same direction, so that either a convex surface or concave surface of a building element can be attached to the lifting yoke.

If the lifting yoke comprises more than one attachment device, the attachment means of the attachment devices may be arranged along a common convex or concave plane while they are pointing in the same direction, in particular wherein the attachment devices are in the first position, the second position and/or any intermediate position. This allows to attach a concave or convex surface of the building elements to all attachment means, or to all attachment devices, respectively, of the lifting yoke.

Preferably, the attachment device is pivotable into at least one intermediate position, in which the attachment means is pointing sidewards in relation to the hanging arrangement of the lifting yoke. In the intermediate position, for instance the attached building element may be rotated for 45° or for 90° compared to the first position, or the second position, respectively. Also, other intermediate positions, in which another angle with respect to the first position and/or the second position is obtained for the building element, are possible. Arranging the building element in an intermediate position may facilitate the arrangement of the building element in the blade mold, since the orientation of the building element can be precisely adjusted to the final orientation of the building element in the setup of components arranged for forming the rotor blade. Furthermore, due to the ability to obtain a wide variety of different orientations of a building element, the lifting yoke may be used as a universal lifting yoke for different building elements and/or for differently oriented building elements, so that no other lifting yokes have to be provided.

Preferably, the main body comprises a C-shaped frame structure, wherein an upper edge of the C-shaped frame structure is attachable to the hoisting means and wherein the attachment device is arranged at the lower edge of the C-shaped frame structure. In particular, when the attachment device is arranged in the second position, the building element to be lifted can be partly encompassed by the C-shaped frame structure, so that the attachment means can be attached to the bottom side surface of the building element. Hence, the C-shaped main body allows for arranging the lifting yoke partly around a building element to be lifted prior to an attachment of the attachment means to a bottom side surface of the building element. The building element may be supported locally, for instance on a frame structure, so that the lifting yoke main body may partly encompass at least a section of the building element when picking up the building element.

In a preferred embodiment, the lifting yoke comprises a plurality of attachment devices, which are arranged offset to each other along a beam structure. The beam structure may be a solid beam or a beam-shaped structure formed from a lattice structure, or a frame structure, respectively. For instance, a plurality of attachment devices each comprising a box-shaped frame structure, or a box-shaped lattice structure, respectively, may be provided, in particular to enable a light-weight construction of the lifting yoke. In addition, a simple construction of the lifting yoke is obtained so that it is easy to manufacture. Furthermore, by providing a plurality of separated attachment devices arranged along the beam structure, sufficient supporting points, at which the building element is attachable to the lifting yoke, may be provided. The attachment devices may be releasably and/or slidably coupled to the beam structure so that they may be removed or positioned for transport of the lifting yoke and/or for adapting the lifting yoke to different types of building elements to be lifted.

In particular, the beam structure may be releasably attached to the main body, in particular to the lower edge of the C-shaped frame structure of the main body, so that different types of beam structures and/or different types of attachment devices may be attached to the same main body. In addition, also the position of the C-shaped main frame in relation to the ends of the beam structure may be adaptable so that the lifting yoke may be configured to lift building elements with different centers of gravity.

By arranging the attachment devices offset along the beam structure, free spaces between the attachment devices are provided, in which for instance supporting structures like supporting struts or supporting arms, on which a building element may be locally supported for storage and/or transport, may extend so that an encompassing of a stored building element by the lifting yoke is easily possible. In particular, the attachment devices of the lifting yoke may be attached to the bottom side surface of the building element between the supporting struts when they are in the second position and therefore pointing upwards.

In a preferred embodiment, the beam structure is coupled to at least one actuator, wherein the beam structure is pivotable and/or rotatable by the actuator and wherein the attachment devices are simultaneously pivotable relative to the main body by pivoting and/or rotating the beam structure. Coupling the beam structure to at least one actuator allows for simultaneously pivoting all attachment devices coupled to the beam structure so that in particular no individual actuators for each attachment device are required.

By rotating the beam structure, also the attachment devices or their attachment means, respectively, are pivoted and/or rotated so that they are movable between the first position and the second position. The actuator coupled to the beam structure may be for instance an electric motor with a gear box or a hydraulic actuator. Also, a combination of one or more electric actuators and/or one or more hydraulic actuators is possible. The main frame and the actuator for rotating the beam, and optionally also the beam structure, may be releasable from the attachment devices so that these components may be used with other attachment devices and/or in other lifting yokes that are required in the manufacturing of wind turbine blades, for instance in a lifting yoke used for lifting precasted parts of a web structure in a blade, or comparable parts of a blade, respectively.

In a preferred embodiment, the beam structure comprises at least one retractable and/or extendable telescope section and/or the beam structure is segmented into a plurality of segments releasably attached to each other, wherein each segment is attached to at least one attachment device. Advantageously, this allows for customizing the lifting yoke in order to adapt it to different types of building elements to be lifted. In addition, by providing the beam structure with at least one retractable telescope section and/or as a plurality of segments, also a disassembly of the lifting yoke becomes possible, which may advantageously facilitate the transport of the lifting yoke.

By providing at least one telescope section of the beam structure, the length of the beam structure and hence the distance between one or more of the attachment devices can be adjusted. This allows for adjusting the lifting yoke to a certain type of building element to be lifted and/or to different storage racks with varying distances between their supporting sections. The telescope section may comprise for instance an actuator which allows for automatic retraction and/or extension of the telescope section. In addition or alternatively, also a manual extraction and/or extension of the telescope section may be possible.

In addition or alternatively, it is possible that the beam structure is segmented into a plurality of segments, wherein the segments can be added or removed depending on the length of a building element to be lifted by the lifting yoke. In addition, the number of attachment devices can be adapted by adding or removing segments comprising each at least one attachment device.

Preferably, the lifting yoke comprises at least one releasable locking means for locking an attached building element to the attachment device. One or more locking means may be arranged for instance at the or each attachment device. The locking means may attach the building element to the lifting yoke so that in case of a failure of an attachment means, a secure attachment of the building element to the lifting yoke remains possible. This secures the building element to the lifting yoke in case that for instance a vacuum of a vacuum cup used as attachment means is lost and/or that one or more needles of an attachment means provided as needle dripper brakes. Correspondingly, also for further type of attachment means, additional security by locking the building element to the lifting yoke is obtained. Advantageously, no additional safety measures for securing the lifted building element are required so that for instance the usage of additional safety liners may be avoided. In addition, a secure lifting of the building element also enables secure working underneath a suspended building element.

In a preferred embodiment, the releasable locking means is a pivotable bracket, wherein the attached building element is clampable to the attachment section by the locking means. The pivotable bracket may be hinged to a side of the attachment device, wherein the clampable bracket may be pivoted sectionally underneath or onto an attached building element, depending on the orientation of the attachment means, or the attachment device, respectively. When pivoted underneath or onto the attached building element, the pivotable bracket may clamp the attached building element to the attachment device, or to the attachment means, respectively, securing the fixation of the building element to the lifting yoke.

In a preferred embodiment, the lifting yoke comprises at least one adjustable counterweight element, wherein the counterweight element is adjustable in such manner that a horizontal position of a center of gravity of the lifting yoke in a hanging state of the lifting yoke remains constant at least in the first position and the second position of the attachment device, in particular of a center of gravity of a combination of the lifting yoke and an attached building element.

If the lifting yoke is adapted to orientate an attached building element in an intermediate position, the counterweight element is in particular adapted also to keep the center of gravity of the lifting yoke, or in particular of a combination of the lifting yoke and the attached building element, at a constant position also in the intermediate position. The counterweight element may be for instance coupled with an actuator which allows for arranging the counterweight element under different angles and/or in different distances to the main body of the lifting yoke.

By providing the counterweight, it may be ensured that the lifting yoke remains in a horizontal position, in particular when the building element is rotated between the first position and the second position, or vice versa. In particular, the counterweight element may be continuously adaptable so that also during the movement of the building element between the first position and the second position, or vice versa, a constant horizontal orientation, or a constant horizontal position of the center of gravity is obtained. Advantageously, unintended movements of the lifting yokes and/or a swinging of the lifting yoke induced by the rotational movement of the attachment device, or the attached building element, respectively, can be avoided.

A method according to the invention for lifting a building element used for building a rotor blade of a wind turbine blade uses a lifting yoke according to the invention.

Preferably, the building element is attached to the attachment means of the lifting yoke, wherein after the attachment, the building element is rotated by pivoting the at least one attachment device. The building element may be rotated for example from the first position to the second position or vice versa. Also, a rotation from the first or the second position into an intermediate position is possible. In addition, a rotation of the empty lifting yoke without attached building element may occur prior to the attachment of the lifting yoke to the building element, depending on the state of the lifting yoke and/or on the orientation of the building element to be lifted.

Preferably, the building element is lifted from a building element mold to a storage rack, from a storage rack to a rotor blade mold, or from a building element mold to a rotor blade mold. The storage rack may be for instance movable, so that it may be used for transporting a preform building element from a preform mold to a rotor blade mold. The building element mold may be a preform mold in case of a preform building element, or a pre-casting mold in case of a precasted building element, respectively.

All details and advantages described in relation to the lifting yoke according to the invention apply correspondingly to the method for lifting a building element according to the invention and vice versa.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: an embodiment of a lifting yoke according to the invention, wherein the attachment means are in the first position,
- Fig. 2: a schematic view of a blade mold,
- Fig. 3: the embodiment of the lifting yoke, wherein the attachment means are in the second position,
- Fig. 4: the embodiment of the lifting yoke, wherein the attachment means are in an intermediate position,
- Fig. 5: a detail of the embodiment of the lifting yoke,
- Fig. 6: a detail of the embodiment of the lifting yoke in the vicinity of a storage rack,
- Fig. 7: a cross-sectional view of the embodiment of the lifting yoke in the vicinity of the storage rack,
- Fig. 8: a further detail of the embodiment of the lifting yoke,
- Fig. 9: the embodiment of the lifting yoke in a partly disassembled state, and
- Fig. 10: a detailed view of a further embodiment of an attachment device of the embodiment of the lifting yoke.

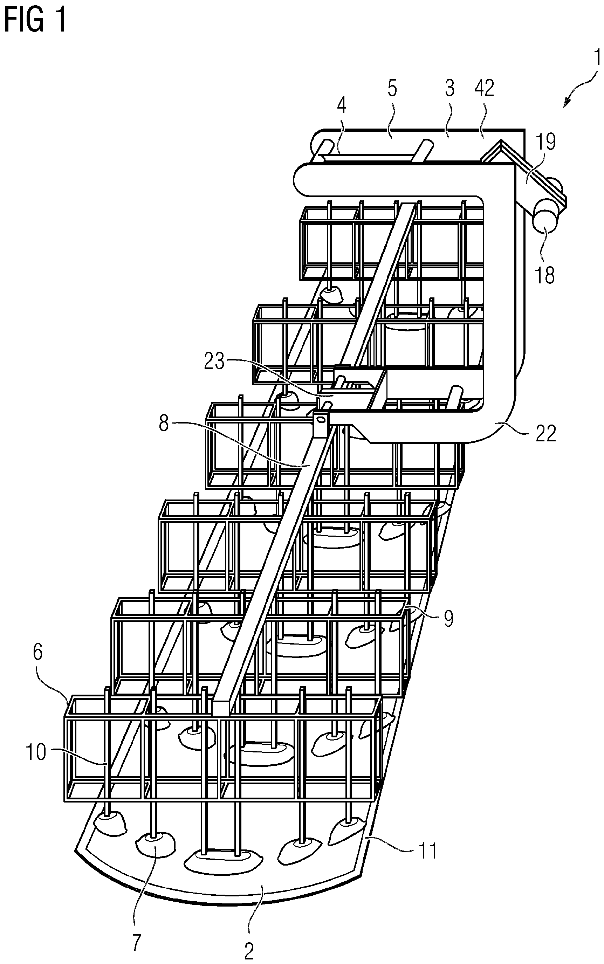

In fig. 1, an embodiment of a lifting yoke 1 is shown. The lifting yoke is adapted for lifting a building element 2 used for building a rotor blade of a wind turbine. The lifting yoke 1 comprises a main body 3, which is arrangeable hanging on a hoisting means (not shown). The hoisting means may be for instance a crane, a fork lift or the like. Therefore, the main body 3 may comprise an attachment section 4 attachable to the hoisting means, for instance by a rope-like attachment means. In this embodiment the main body 3 comprises a C-shaped frame structure 5, wherein the attachment section 4 is provided at an upper edge 42 of the C-shaped frame structure 5.

The lifting yoke 1 comprises a plurality of attachment devices 6, which each comprise at least one attachment means 7. The attachment devices 6 are arranged at the lower edge of the C-shaped frame structure 5. The attachment devices 6 are arranged offset to each other along a beam structure 8, wherein the beam structure 8 is attached to the lower edge of the C-shaped frame structure 5. Each of the attachment devices 6 comprises a box-shaped frame structure 9, wherein the attachment means 7 is coupled to the box-shaped frame structure 9 by an arm 10, which is movable relative to the box-shaped frame structure 9. The beam structure 8 may be provided as a solid beam or as a beam-shaped lattice structure, or a beam-shaped frame structure, respectively.

The attachment devices are pivotable with respect to the main body 3, wherein the attachment means 7 are fixedly coupled to the box-shaped frame structure 9 of the attachment devices 6 so that the attachment means 7 are all pointing in a common direction determined by the position, in which the attachment devices 6 are arranged, or pivoted, respectively. Hence, by pivoting the attachment devices 6, also all attachment means 7 are pivoted simultaneously.

The attachment means 7 are each attachable to a surface 11 of the building element 2 to be lifted. In this embodiment, the attachment means 7 are provided as suction cups, to which a vacuum can be applied using an evacuating means (not shown). The evacuating means may be for instance a vacuum pump which is connected to the suction cups, or the end of hollow arms 10 opposite to the attachment means 7, respectively, by a plurality of hoses (not shown). The attachment devices 6 of the lifting yoke 6 are in the first position so that the attachment devices 7 are pointing downwards to a top side of the building element 2.

The lifting yoke 1 may be used in an embodiment of a method for lifting the building element 2. In the depicted embodiment of the lifting method, the attachment means 7 are attached to a concave surface 11 of the building element 2, which is directed upwards forming the top side surface of the building element 2. By the lifting yoke 1, the building element 2 can be picked up and lifted and/or transported from one position another. The building element 2 may be for instance a preform building element or a precasted building element.

The lifting yoke 1 may be adapted for lifting building elements 2 with a length of for example between 10 to 20 m and a width of for example 3 m to 5 m, wherein the building elements 2 are in particular straight in their length direction and curved in their width direction. The building elements 2 may comprise one or more layers of a fiber-based material and/or one or more core layers consisting of a rigid material, for instance of balsa wood and/or of a polymer foam-based core material.

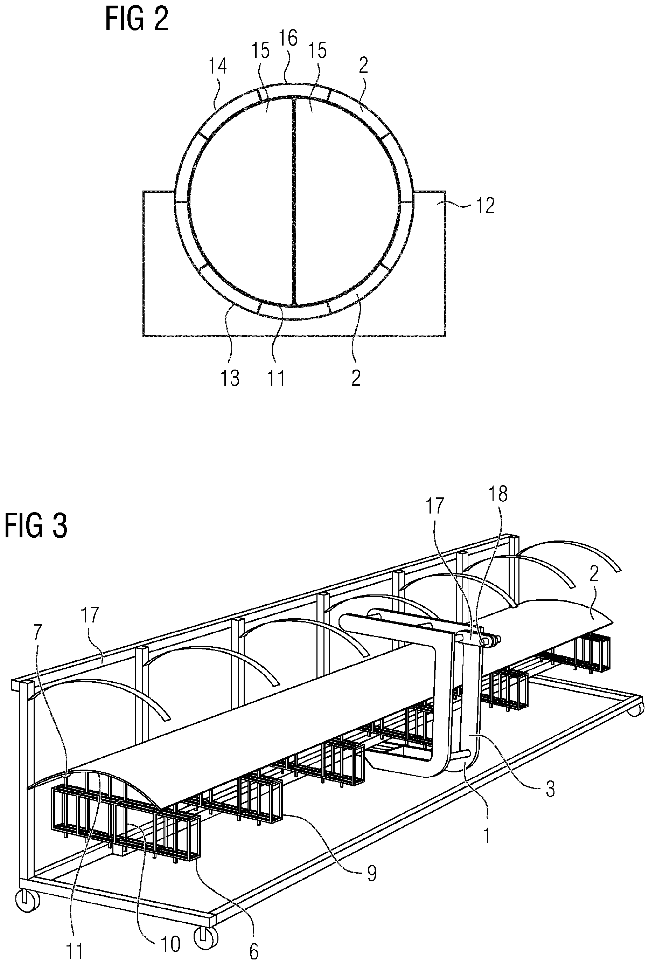

In fig. 2, a schematic view of a blade mold 12 used for manufacturing a wind turbine rotor blade 14 is shown. The blade mold 12 comprises a molding surface 13, on which a plurality of building elements 2 is arranged. Furthermore, in the center of the rotor blade 14 to be fabricated, two mandrel structures 15 are shown supporting the building elements 2 arranged in the upper half of the rotor blade 14 to be manufactured.

As can be easily seen, the building elements 2 arranged on the molding surface 13 are arranged with their concave surface 11 pointing upwards. Hence, they may be arranged in the blade mold 12 by being attached to the lifting yoke 1 as described in relation to fig. 1. However, the building elements 2 in the upper half of the mandrels 15 are arranged the other way round, hence with their convex surface 16 on top, so that they have to be turned at least once compared to the building elements 2 arranged directly on the molding surface 13 of the blade mold 12.

The building elements 2 may comprise all the same geometry so that they may be fabricated in particular using the same building element mold (not shown). However, in this building element mold, they may be either fabricated with their concave surface 11 facing up, or with their convex surface 16, facing up, respectively. In either case, some of the building elements 2 have to be rotated after their fabrication and prior to their arrangement in the rotor blade mold 12.

Therefore, the attachment devices 6 of the lifting yoke 1 are pivotable between a first position, in which the attachment means 7 are pointing downwards for attachment to topside surface of the building element 2, and a second position for attachment to a bottom side surface of the preform building element 2, respectively. In fig. 1, the lifting yoke 1 is shown with the attachment devices 6 in the first position and hence with the attachment means 7 pointing downwards and attached to the concave surface 11 of the building element 2. In this orientation of the building element 2, the concave surface 11 is the upper surface of the building element 2.

In fig. 3, the lifting yoke 1 is shown with the attachment devices 6 rotated in the second position, so that the attachment means 7 are pointing upwards for attachment to a bottom side surface of the building element 2. The preform building element 2 is stored on a storage rack 17, wherein the concave surface 11 is pointing downwards forming the bottom side surface of the building element 2.

Alternatively to the depicted attachment of the lifting yoke 1 to the concave surface 11, also an attachment of the attachment means 7 to the convex shaped surface 16 is possible, depending on the arrangement of the building element 2 on the storage rack 17 and/or the intended position of the building element 2 in the blade mold 12.

For attachment to the convex surface 16, the attachment means 7 may each be moved linearly relative to each other by the arms 10, so that they may align along a convex plane. Therefore, the arms 10 can be movable relative to each other and/or relative to the box-shaped frame structure 9 of the attachment device 6 manually and/or by at least one actuator (not shown). This allows in particular to move the attachment means 7 in such manner that they are aligned along a common convex or concave plane corresponding to a surface of the building element 2 to be attached.

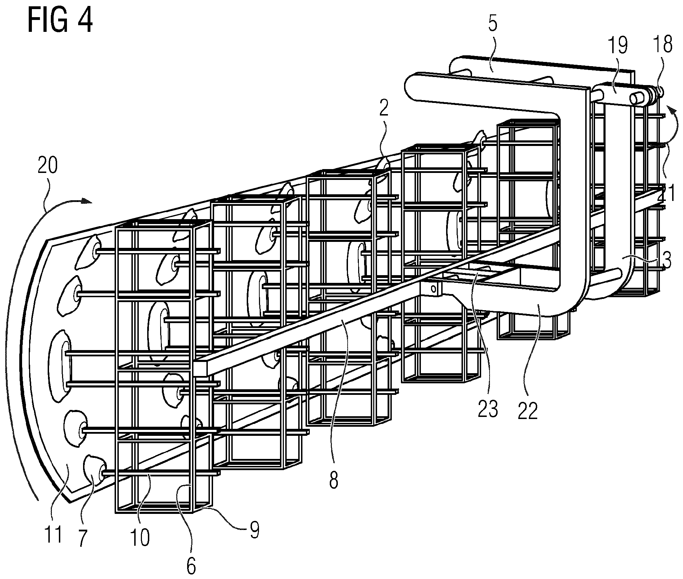

In fig. 4, the lifting yoke 1 is shown with the attachment devices 6 rotated in an intermediate position, in which the attachment means 7 are pointing sidewards. This may be an intermediate step in the rotation from the first position to the second position. Alternatively, the intermediate position may also be the final position of the rotation movement so that the arrangement of the building element 2, for instance in the side regions of the blade mold 12, is facilitated.

To ensure the proper horizontal orientation of the lifting yoke 1 in the first position, the second position and/or in one or more intermediate positions, the lifting yoke 1 comprises at least one adjustable counterweight element 18, which is adjustable in such manner that the horizontal position of a center of gravity of the lifting yoke in a hanging state of the lifting yoke 1 remains constant, in particular in the first position, in the second position and in each intermediate position in between.

The counterweight element 18 may comprise an actuator (not shown) which allows for rotating the counterweight element 18 by means of a lever 19 relative to the main body 3 of the lifting yoke 1. Therefore, the counterweight element 18 is coupled with the upper edge of the C-shaped frame structure 5 of the main body 3. During the rotation movement for instance from the first position to the second position, which is schematically indicated by the arrow 20, the counterweight element 18 may be pivoted by using the actuator and the lever 19, as it is schematically indicated by the arrow 21. By pivoting the counterweight element 13, the horizontal position of the center of gravity of the lifting yoke 1 and/or the combination of the lifting yoke 1 and the preform building element 2 remains constant. In particular, the counterweight element 18 may be continuously adaptable, so that during the movement of the building element 2 between the first position and the second position, or vice versa, a constant horizontal orientation, or a constant horizontal position of the center of gravity of the lifting yoke 1 is obtained. This facilitates the rotation of the preform element 2 as well as the arrangement of the building element 2, since unintended swinging movements of the lifting yoke 1 or the like can be prevented.

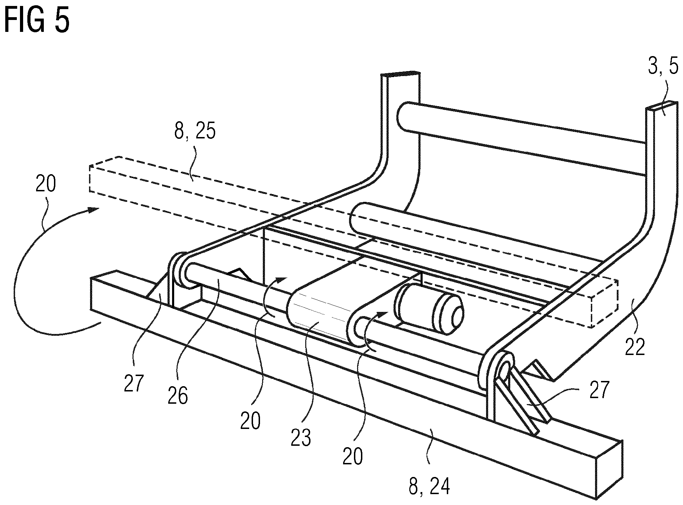

Fig. 5 shows a detail of the lifting yoke 1. From the lifting yoke 1, only the lower edge 22 of the C-shaped frame structure 5 of the main body 3 is shown. The beam structure 8 is coupled to the main body 3, wherein the beam structure 8 is pivotable relative to the main body 3 by at least one actuator 23. In this embodiment, the actuator 23 is an electric motor coupled via a gear-box to the beam structure 8 so that the beam structure 8 may be pivoted from the depicted first position 24 to the second position 25, which is schematically indicated by dashed lines. The movement between these positions is again indicated by the arrow 20.

The beam structure 8 is coupled to the actuator 23 by a rod section 26, which is arranged sectionally parallel to the beam structure 8. The rod section 26 is connected to the beam structure 8 by a plurality of connecting sections 27, which rigidly couple the rod section 26 to the beam structure 8. Hence, by rotation of the actuator 23, the beam section 8 is pivoted between the first position 24 and the second position 25. Consequently, also all attachment devices 6 and therefore all attachment means 7 are pivoted between these positions.

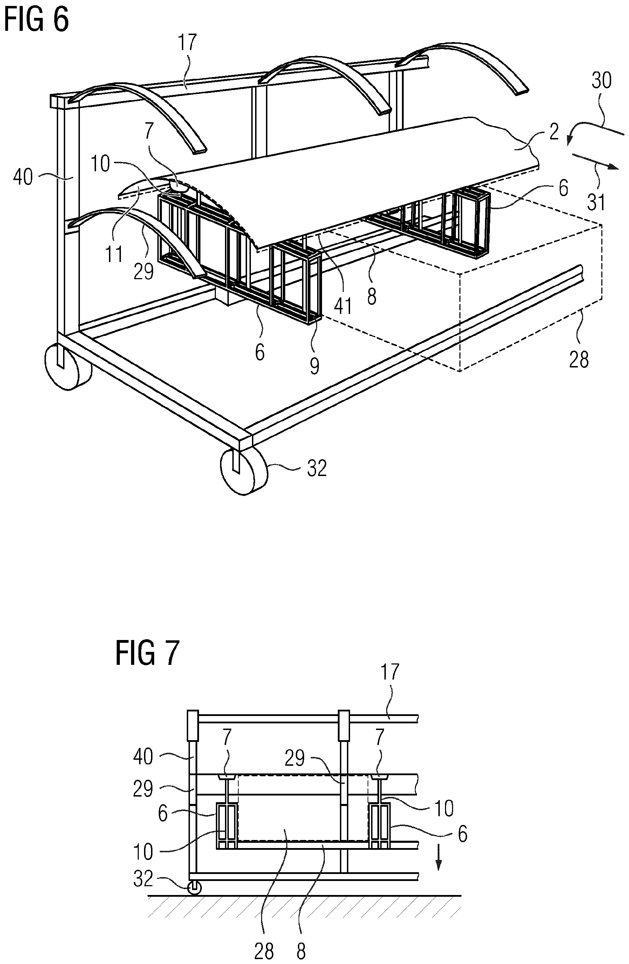

In fig. 6, a detail of the lifting yoke 1 in the vicinity of the storage rack 17 is shown. The attachment devices 6 of the lifting yoke 1 are shown in the second position so that the attachment means 7 are pointing upwards. The attachment means 7 are connected to the concave shaped surface 11, which is the bottom side surface of the building element 2 when it is supported on the storage rack 17.

Due to the box-shaped frame structures 9 of the attachment devices 6, there is a distance between the attachment means 7, or the bottom side of the building element 2, respectively, and the beam structure 8. Therefore, the beam structure 8 does not come into contact with supporting sections 29 of the storage rack 17, on which the building element 2 is arranged. The supporting sections 29 are provided as supporting struts or supporting arms, that protrude from a main frame 40 of the storage rack 17.

In addition, due to the offset arrangement of the attachment devices 6 along the beam structure 8, a clearance volume 28, which is shown schematically in dashed lines, is created between two adjacently arranged attachment devices 6 and hence also between their attachment means 7. This allows for easily placing the building element 2 on the storage racks 17, in particular by moving the attachment devices 6 between supporting sections 29 of the storage rack 17. Likewise, also the picking up of the building element 2 arranged on the storage rack 17 is facilitated, since the lifting yoke 1 may be easily moved in contact with the bottom side surface of the building element 2.

The building element 2 may be arranged on the storage rack 17 for instance by approaching it to the storage rack 17 and then lowering it on the respective supporting section 29, as it is schematically indicated by the arrow 30. Afterwards, the attachment means 7 can be released from the building element 2 and the lifting yoke 1 may be lowered and/or the attachment means 7 may be retracted at least partly into the box-shaped frame structures 9 to allow for removing the lifting yoke 1 from the storage rack 17, as schematically indicated by the arrow 31.

In fig. 7 a cross-sectional view of the lifting yoke 1 in the vicinity of the storage rack 17 is shown. Furthermore, the clearance volume 28 is depicted, wherein one of the supporting sections 29 is protruding from the main frame 40 between two adjacently arranged attachment devices 6, which are arranged offset along the beam structure 8. Due to the clearance volume 28, the picking-up of the building element 2, or the arrangement of the building element 2 on the storage rack 17, is not obstructed by the supporting structures 29.

The storage rack 17 may be used for storing the building elements 2 for instance after their fabrication. Furthermore, the storage rack 17 may comprise wheels 32, which allow for using the storage rack 17 also for transporting the building elements 2, for instance from a building element mold to a rotor blade mold 12.

It is possible that the building element 2 comprises a vacuum foil 41 arranged on one of the surfaces 11, 16, as schematically depicted in Fig. 6. Alternatively, it is possible that the preform element 2 is arranged inside a vacuum bag (not shown) surrounding the preform building element 2 entirely when it is lifted to the storage rack 17 from the blade mold 12. Alternatively or additionally, also a molding tray (not shown), on which the building element 2 has been fabricated, can remain on one of the concave surfaces 11 or the convex surface 16 of the preform building element 2, for instance depending on whether a convex or concave building element mold was used. The molding tray may be a thin metal plate comprising a concave and/or a convex surface used as molding surface for manufacturing the building element 2.

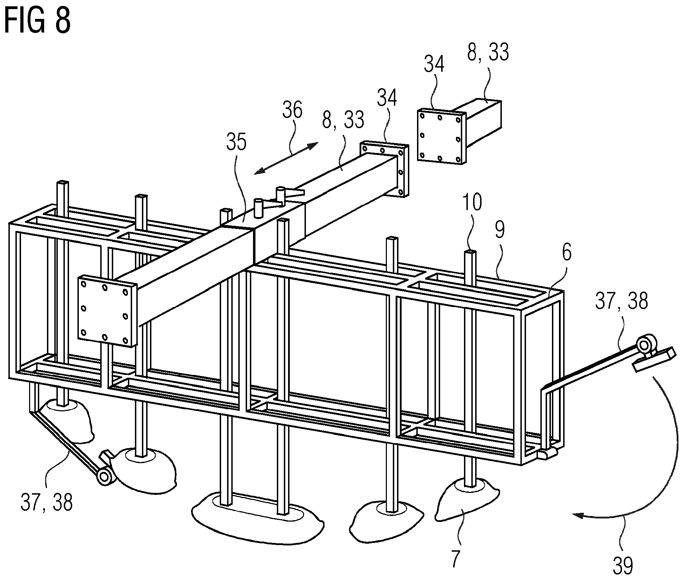

Fig. 8 depicts a detail of the lifting yoke 1. The beam structure 8 of the lifting yoke 1 comprises a plurality of segments 33, which are releasably attached to each other, for instance via flange-shaped end sections 34, which may be connected by a bolting connection or the like. One of the segments 33 may be connected to the main frame 3, wherein the remainder of the segments 33 may each comprise an attachment device 6 or not. Furthermore, also the length of the segments 33 may be equal or different. This allows for adapting the lifting yoke 1 to different types and/or shapes of building elements 2 and/or storage racks 17, respectively.

In addition or alternatively, the beam structure 8, or one or more of the segments 33, respectively, may comprise a telescopic section 35, which allows for length-adjusting of the beam structure 8, as schematically indicated by the arrow 36. The telescopic section 35 may be manually extractable or retractable. In addition or alternatively, an actuator for automated extending and retracting of the telescopic section 35 and hence for automatically adjusting the length of the beam structure 8 may be used.

By providing a plurality of telescopic segments 35, for instance the distance between one or more adjacently arranged attachment devices 6 may be adapted, in particular in accordance to the length and/or the weight of a building element 2 to be lifted. Since also the arms 10 may be movable relative to the box-shaped frame structure 9 of the attachment devices 6, a wide variety of customization options for the lifting yoke 1 are provided. It is possible, that the arms 10 and/or the telescopic sections 35 are each movable by at least one actuator, so that an automized adaption of the lifting yoke 1 to different building element geometries may occur.

To secure a lifted building element 2 to the lifting yoke 1, the lifting yoke 1 comprises a plurality of releasable locking means 37, which allow to lock a lifted building element 2 to the lifting yoke 1. The releasable locking means 37 are provided as pivotable brackets 38, wherein the brackets 38 are arranged at two opposing sides of the frame structure 9 of the attachment device 6, wherein the sides are offset in the width direction of the building element 2 to be attached.

The brackets 38 used as locking means 37 may be pivoted underneath the attachment means 7, as schematically indicated by the arrow 39, when a preform building element 2 has been attached to the lifting yoke 1 with the attachment devices 6 oriented in their first position. Correspondingly, when the attachment devices 6 are in the second position, the locking means 37 may be pivoted onto the top side surface of the building element 2 for fixation. By the locking means 37, the building element 2 is securely clamped to the attachment devices 6, or the lifting yoke 1, respectively.

The locking means 37 allows for securing the building element 2 to the lifting yoke 1, for instance in case of a failure of one or more of the attachment means 7. Hence, a stable attachment of the building element 2 to the lifting yoke 1 can also be obtained in case of a vacuum failure of an attachment means 7 provided as a suction cup and/or by the braking of one or more needles of an attachment means 7 provided as a needle gripper. Also for other types of attachment means 7, an additional security is obtained since an unintended loosening of the preform building element 2 from the lifting yoke 1 can be prevented.

Depending on the type of the attachment means 7, which are used on the lifting yoke 1, one or more further components can be part of the lifting yoke 1. If attachment means 7 provided as suction cups and/or flow cups are used, for instance hoses or the like may be connected to the attachment means 7 and/or to the arms 10 to allow for the creation of a vacuum underneath the suction cups and/or for sucking air into the cups in order to lift the building element 2. Alternatively, when attachment means 7 provided as needle-grippers are used, one or more actuators may be provided for driving the needles of the needle gripper into or out to the surface of a building element 2 to be attached. Alternatively, also other types of attachment means 7 like vortex trippers or Bernoulli grippers may be used, which may also have air-guiding means connected to them in order to allow for the required air flow.

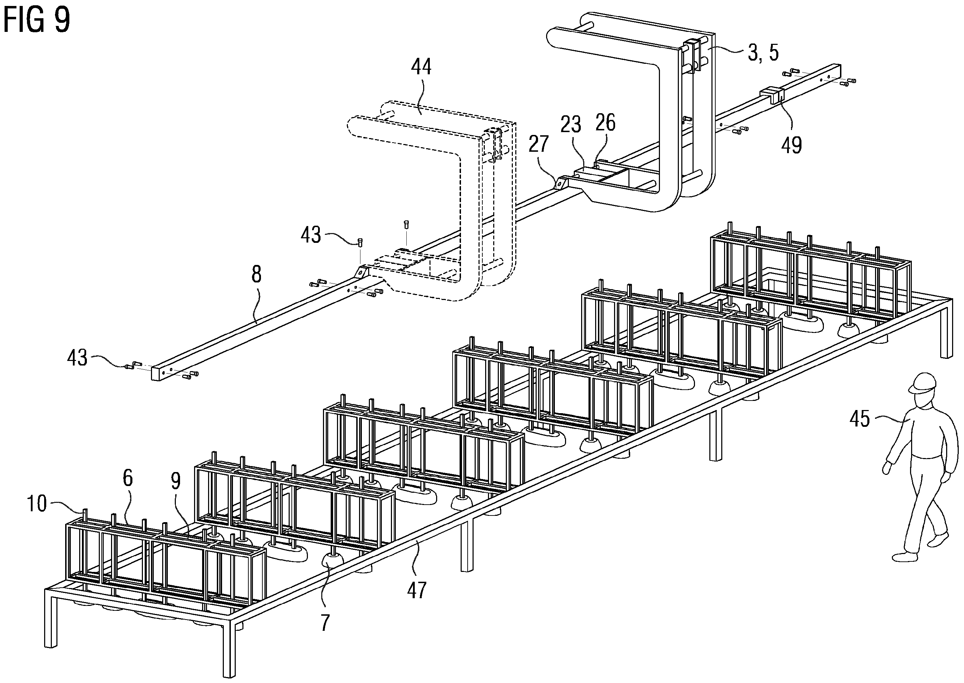

In fig. 9 the embodiment of the lifting yoke 1 is shown in a partly disassembled state. The attachment devices 6 are releasably attachable to the beam structure 8 by bolted connections 43, wherein the lifting means 6 are shown separated from the beam structure 8 and arranged on an attachment device storage rack 47. It is in particular possible that the attachment devices 6 may be attachable at different positions to the beam structure 8 and/or that different types of attachment devices 6, for instance with different attachment means 7, are attachable to the beam structure 8.

In addition, also the C-shaped frame structure 5 of the main body 3 as well as the actuator 23, the rod section 26 and the connecting sections 27 of the main body 3 may be releasably attachable to the beam structure 8 in different positions, for instance by bolted connections 43. An alternative position 44 of these components is shown schematically in dashed lines. The position of the main body 3 relative to the beam structure 8 may be adapted for instance in dependence of a center of gravity of the building element 2 to be lifted. Furthermore, one or more weight elements 49 may be releasably attached in different positions to the beam structure 8 in order to adjust the lifting yoke in dependence of the center of gravity of a building element 2 to be lifted. In order to show the approximate size of the lifting yoke 1, a worker 45 is schematically depicted.

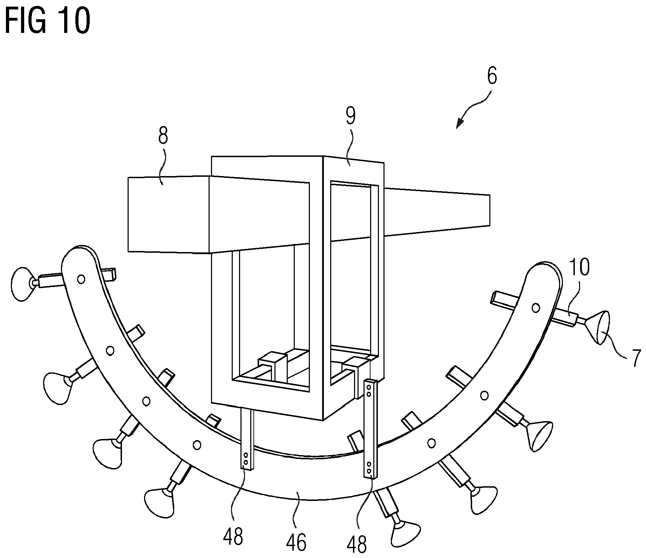

Fig. 10 shows a detailed view of a further embodiment of an attachment device 6 of the embodiment of the lifting yoke 1. In this embodiment of the attachment device 6, the box-shaped frame structure 9 is slidably coupled to the beam structure 8 so that it may be arranged and/or fixated to the beam structure 8 in different positions. Furthermore, the attachment device 6 comprises a holding segment 46, to which the arms 10 are mounted. The holding segment 46 is attached to the box-shaped frame structure 6 by one or more fixation sections 48.

The attachment means 7 are attached to the arms 10, wherein the arms 10 allow to expand or retract the attachment means 7 relative to the box-shaped frame structure 9, or relative to the holding section 46, respectively. The holding section 46 is provided as an arc-segment shaped section, or as a curved rail, respectively.

It is possible that a holding section 46 comprising a plurality of segments (not shown) may be used, wherein the segments may be arrangeable in different angles towards each other to allow for adapting the shape of the holding section 46 and therefore also of the orientation of the attachment means 7 relative to each other. The segments may be for instance releasably attached to each other by bolted connections. This allows also to adapt the attachment device 6, or the entire lifting yoke 1, respectively, to different types of building elements 2 to be lifted.

In a further embodiment of the lifting yoke 1, it is possible that as attachment means 7, a vacuum blanket is used, which may be supported by a plurality of the box-shaped frame structures 9 of the attachment devices 6 and/or by one large box-shaped frame structure 9. Hence, the lifting yoke 1 may comprise only one attachment device 6, which in particular spans over the entire length of the beam structure 8 and/or the entire length of the building element 2 to be lifted, respectively. Such a lifting yoke 1 may be used for instance when no storage rack 17 is involved and hence no support structures 29 have to be arranged between the attachment devices 6.

In an embodiment of a method for lifting a building element 2, the lifting yoke 1 is used to lift a building element 2, in particular a preform building element or a precasted building element. The building element 2 is attached to the attachment means 7 of the lifting yoke 1, wherein after the attachment, the building element 2 is rotated by pivoting the at least one attachment device 6 of the lifting yoke 1.

In particular, the lifting yoke 1 may be used to lift the building element 2 from a building element mold to a storage rack 17, from the storage rack 17 to the rotor blade mold 12 or from a building element mold to the rotor blade mold 12, respectively. Advantageously, the lifting yoke 1 can be used for different lifting procedures and allows for rotation of at least some of the building elements 2 in order to obtain the desired orientation of the preform building element 2 for their arrangement in a rotor blade mold 12.

Although the present invention has been described in detail with reference to the preferred embodiment, the present invention is not limited by the disclosed examples from which the skilled person is able to derive other variations without departing from the scope of the invention.

## Claims

1. Lifting yoke for lifting a building element (2) used for building a rotor blade of a wind turbine, wherein the lifting yoke (1) comprises a main body (3) and at least one attachment device (6), wherein the main body (3) is arrangeable hanging on a hoisting means and wherein the attachment device (6) comprises at least one attachment means (7) attachable to a surface (11, 16) of a building element (2) to be lifted, wherein the attachment device (6) is pivotable with and without attached building element (2) at least between a first position and a second position, wherein the attachment means (7) is pointing downwards in the first position for attachment to a top side surface of a building element (2) and upwards in the second position for attachment to a bottom side surface of a building element (2).

2. Lifting yoke according to claim 1, **characterized in that** the attachment means (7) is a needle gripper, a vacuum attachment means, in particular a suction cup, a flow cup or a vacuum blanket, and/or an aerodynamic attachment means, in particular a vortex gripper and/or a Bernoulli gripper.

3. Lifting yoke according to claim 1 or 2, **characterized in that** the attachment device (6) comprises a box-shaped frame structure (9), wherein the attachment means (6) is coupled to the box-shaped frame structure (9) by a holding section (46) and/or at least one arm (10), wherein the arm (10) is movable relatively to the box-shaped frame structure (9).

4. Lifting yoke according to one of the preceding claims, **characterized in that** the attachment device (6) comprises a plurality of attachment means (7), wherein the attachment means (7) are linearly movable relatively to each other, wherein the attachment means (7) are arrangeable along a convex or concave plane.

5. Lifting yoke according to one of the preceding claims, **characterized in that** the attachment device (6) is pivotable into at least one intermediate position, in which the attachment means (6) is pointing sidewards in relation to the hanging arrangement of the lifting yoke (1).

6. Lifting yoke according to one of the preceding claims, **characterized in that** main body (3) comprises a C-shaped frame structure (5), wherein an upper edge (42) of the C-shaped frame structure (5) is attachable to the hoisting means and wherein the attachment device (6) is arranged at the lower edge (22) of the C-shaped frame structure (5).

7. Lifting yoke according to one of the preceding claims, **characterized in that** the lifting yoke (1) comprises a plurality of attachment devices (6), which are arranged offset to each other along a beam structure (8).

8. Lifting yoke according to claim 7, **characterized in that** the beam structure (8) is coupled to at least one actuator (23), wherein the beam structure (8) is pivotable and/or rotatable by the actuator (23) and wherein the attachment devices (6) are simultaneously pivotable relative to the main body (3) by pivoting and/or rotating the beam structure (8).

9. Lifting yoke according to claim 7 or 8, **characterized in that** the beam structure (8) comprises at least one retractable and/or extendable telescope section (35) and/or that the beam structure (8) is segmented into a plurality of segments (33) releasably attached to each other, wherein each segment (33) is attached to at least one attachment device (6).

10. Lifting yoke according to one of the preceding claims, **characterized in that** the lifting yoke comprises at least one releasable locking means (37) for locking an attached building element (2) to the attachment device (6).

11. Lifting yoke according to claim 10, **characterized in that** the releasable locking means (37) is a pivotable bracket (38), wherein the attached building element (2) is clampable to the attachment section by the locking means (37).

12. Lifting yoke according to one of the preceding claims, **characterized in that** the lifting yoke (1) comprises at least one adjustable counterweight element (18), wherein the counterweight element (18) is adjustable in such manner that a horizontal position of a center of gravity of the lifting yoke (1) in a hanging state of the lifting yoke (1) remains constant at least in the first position and the second position of the attachment device (6) when pivoting the attachment devices (6).

13. Method for lifting a building element (2) used for building a rotor blade of a wind turbine, wherein a lifting yoke (1) according to one of the preceding claims is used.

14. Method according to claim 13, **characterized in that** the building element (2) is attached to the attachment means (7) of the lifting yoke (1), wherein after the attachment, the building element (2) is rotated by pivoting the at least one attachment device (6).

15. Method according to claim 13 or 14, **characterized in that** the building element (2) is lifted from a building element mold to a storage rack (17), from a storage rack (17) to a rotor blade mold (12), or from a building element mold to a rotor blade mold (12).
